# EUROPEAN PATENT SPECIFICATION

(11) **EP 1 266 526 B1**
(45) Date of publication and mention of the grant of the patent: **25.04.2012**
(21) Application number: 01910716.8
(22) Date of filing: 15.02.2001
(51) Int. Cl.: H04N 7/24, H04N 7/173, H04L 12/56

(54) **METHOD FOR SCHEDULING UPSTREAM COMMUNICATIONS**
VERFAHREN ZUR PLANUNG VON AUFWÄRTSKOMMUNIKATIONEN
PROCEDE SERVANT A ORDONNANCER DES COMMUNICATIONS EN AMONT

(30) Priority: 15.02.2000 US 182470 P; 09.11.2000 US 247188 P; 08.12.2000 US 254415 P; 17.01.2001 US 262201 P; 17.01.2001 US 262203 P
(43) Date of publication of application: 18.12.2002
(73) Proprietor: Broadcom Corporation, Irvine, CA 92617 (US)
(72) Inventor: SALA, Dolors, Atlanta, GA 30324 (US); GUMMALLA, Ajay Chandra V., Atlanta, GA 30309 (US); LIMB, John O., Atlanta, GA 30324 (US); PROTUS, Richard J., Norcross, GA 30071 (US)
(74) Representative: Jehle, Volker Armin
(86) International application number: PCT/US2001/004819
(87) International publication number: WO 2001/062008

(56) References cited:
- EP-A- 0 774 848
- EP-A- 0 829 986
- WO-A-99/18718
- WO-A-99/30449
- US-A- 5 463 624
- US-A- 5 926 478
- LIMB J O ET AL: "AN ACCESS PROTOCOL TO SUPPORT MULTIMEDIA TRAFFIC OVER HYBRID FIBER/COAX SYSTEMS" PROCEEDINGS OF THE INTERNATIONAL WORKSHOP ON COMMUNITY NETWORKINGINTEGRATED MULTIMEDIA SERVICES TO THE HOME, XX, XX, 20 June 1995 (1995-06-20), pages 35-40, XP000984181
- SALA D ET AL: "ADAPTIVE CONTROL MECHANISM FOR CABLE MODEM MAC PROTOCOLS" PROCEEDINGS OF THE IEEE INFOCOM '98. THE CONFERENCE ON COMPUTER COMMUNICATIONS. 17TH ANNUAL JOINT CONFERENCE OF THE IEEE COMPUTER AND COMMUNICATIONS SOCIETY. GATEWAY TO THE 21ST CENTURY. SAN FRANCISCO, CA, MARCH 29 - APRIL 2, 1998, PROCEEDINGS IEEE I, vol. 3, 29 March 1998 (1998-03-29), pages 1392-1399, XP000852009 ISBN: 0-7803-4384-0
- HOGAN ET AL.: "An architectural framework for the support of integrated services by broadband customer premises equipment", XP004059230, COMPUTER NETWORKS AND ISDN SYSTEMS, 1 April 1997 (1997-04-01), pages 595-609,

## Description

### BACKGROUND OF THE INVENTION

### Field of the Invention

The present invention is directed to controlling network transmissions. More particularly, the present invention relates to scheduling transmissions from multiple clients in a network environment.

### Background Art

With the advent of the Internet, it has become more commonplace to develop vast communications networks to readily exchange information over remote areas. As modern technology continues to evolve to create new services to be provided over communications media, a greater demand has been generated for bandwidth and improved quality of services. For example, television broadcasts historically involved one-way communication from a broadcast transmitter to a viewer's home. As interactive or personal television services continue to grow, communications media used to support one-way communications must now contend with an increased demand for bi-directional communications.

In a conventional communications network, a communications device (such as a modem) would request bandwidth from a headend prior to transmitting data to its destination. The headend would allocate bandwidth to the cable modem based on availability and competing demands from other modems. The allocation of bandwidth is typically granted to the requesting modem in a MAP. The cable modem would be required to follow the instructions specified in the MAP, and use the grant for the service specified in the MAP.

EP 0774848 A2 describes a method to allocate bandwidth in a shared-media packet switched network, which accommodates both elastic and inelastic applications, wherein bandwidth transmission slots are allocated between a terminal equipment 210 (or more generally a network access unit 315) and a head-end controller 105 (or more generally a bandwidth allocation unit 305) in a shared-media network (e.g., the network 300). The method manipulates requests for transmission bandwidth received by a bandwidth allocation unit from a network access unit, converting the arriving requests into virtual scheduling times for granting access to the shared media. Further, the method supports multiple quality of service classes via mechanisms which give highest priority to the service class with the most stringent QoS requirements.

EP 0829986 (A1) deals with the need of bandwidth to be reserved on an upstream link for proper operation of the reverse connection and the need of bandwidth to be reserved for the transport of acknowledgments that are sent as a result of receiving data packets via the downstream link. Therefore, the reservation of bandwidth on the upstream must be managed to obtain good performance for both the forward and reverse connections. This is done, by (a) preserving at a point of congestion along the reverse link, e.g., a buffer, the last acknowledgments in place of a previously received acknowledgment, (b) allocating the bandwidth of the upstream link including associated memory (buffer) in a well managed way, and (c) using, for e.g., a fair-queuing or a weighted round-robin scheme to allocate the bandwidth of the upstream link such that the weighting is based on parameters associated with the downstream link. This is achieved while maintaining the bandwidth ratio of forward to reverse path of each connection below a predetermined boundary.

WO 9918718 (A1) refers to a set-top box system capable to support bi-directional communication and in-home control functions, to access and decode information from multiple broadcast sources, and to seamlessly combine the decoded information for presentation to a User. A decoder system is described with a separate tuner, demodulator and processing paths for concurrent and scaleable processing and decoding of broadcast image representative data encoded in different data formats and received on a common physical communication link. The decoder system incorporates a separate return communication path channel permitting secure return communication with a broadcast source on the common communication link.

US 5 463 624 A (DSC COMMUNICATIONS CORP.) 31 October 1995 (1995-10-31) describes managing upstream communications from a local node in a communications network with local and remote nodes. The interface module maintains a subqueue for each class of service supported. A first-in/first-out queueing method is implemented independently in each of the classes of service subqueue. Within each subqueue, the ordering is strict first-in/first-out. However, higher priority packets in one subqueue may get ahead of lower priority packets in another subqueue waiting for access to the bus. Each interface module determines if a packet is present at the head of each of its corresponding subqueues and issues a request of the associated priority level for each class of service subqueue needing access to the bus. If multiple CoS subqueues share a single request priority level, the module itself must choose which packet from the head of all subqueues sharing a single request priority level gains access to the bus upon a grant received from the arbiter. The interface module scans its normal class of service ingress subqueues for packets and drives its associated requests on the request bus. If a grant message has been recognized for any of the pending requests then a packet is dequeued from the head of the appropriate subqueue associated with the request being granted. Next this packet is staged to be transmitted into the ingress bus media beginning with the next time slot.

Problems arise when the service specified in the MAP is later determined to no longer require the bandwidth, or require more bandwidth than originally requested. Another problem can occur if another service of equal or higher priority should require immediate bandwidth shortly after the headend's granting a lower-priority service's request bandwidth. The cable modem may not be able to use the granted bandwidth to transmit data from the higher priority service, because the grant would be restricted to the lower priority service. For example, a DOCSIS-compliant network system specifies that a cable modem must accept decisions made during the requesting phase.

One mechanism that can be implemented to reduce latency would be to utilize piggyback requests for bandwidth. Piggyback requests can be very effective if a cable modem is operating in a contention mode, where the modem transmit packets without a specified grant. Transmitting a signal during a contention mode increases the likelihood of the packets colliding, getting loss or becoming corrupted.

However, the conventional way of piggybacking requests is to use variable sized headers. The header can be extended to incorporate the piggyback request when there exist a need to send one. This is a common practice in a DOCSIS-compliant environment. This approach is more effective if the header is very small and/or the size of the request message is also small. Otherwise, piggybacking requests can add excessive packet overhead that require more bandwidth or may cause packet latency.

Consequently, a system and method are needed to solve the above-identified problems and provide a simple, efficient and cost-effective way to schedule communications in an classify packets in a dynamic environment.

### BRIEF SUMMARY OF THE INVENTION

The present invention provides a method for scheduling transmissions from a plurality of services operating over a widely distributed communications network a headend communications device (such as a cable modem termination system) functions as a arbitrator of bandwidth among a plurality of cable modem configurable for bi-directional communications. The headend grants a bandwidth region to a specified cable modem or assigns contention regions for a group of cable modems.

Each cable modem contains a local scheduler that sends requests for bandwidth according to local policies or rules. Upon receipt of a grant from the headend, the local scheduler selects packets to be transmitted to best serve the needs of the services associated with the cable modem. Accordingly, a service requesting bandwidth may not be the service utilizing the grant corresponding to bandwidth request. Nonetheless, the local scheduler manages bandwidth allocation among its local services such that all requesting services eventually receive bandwidth.

In an embodiment, the cable modem contains multiple priority queues for collected packets from different services. The local scheduler is programmable to transmit packets from the priority queues based on the actual priority of the associated service. For example, local rules may specify that voice telephony services have a higher priority than video conferencing.

In an embodiment, independent piggybacking is used to request additional bandwidth. The present invention allows single piggybacking, multiple piggybacking and cross-piggybacking.

### BRIEF DESCRIPTION OF THE DRAWINGS/FIGURES

The accompanying drawings, which are incorporated herein and form part of the specification, illustrate the present invention and, together with the description, further serve to explain the principles of the invention and to enable a person skilled in the pertinent art to make and use the invention. In the drawings, like reference numbers indicate identical or functionally similar elements. Additionally, the leftmost digit(s) of a reference number identifies the drawing in which the reference number first appears.

FIG. 1 illustrates a data traffic management system

FIG. 2 illustrates an operational flow diagram for the steps involved in scheduling communications according to an embodiment of the present invention.

FIG. 3 illustrates a block diagram of an example computer system useful for implementing the present invention.

FIGS. 4a and 4b illustrate an operational flow diagram for the operating states of a cable modem.

### DETAILED DESCRIPTION OF THE INVENTION

### Table of Contents

I. Data Traffic Management System Overview
II. Cable Modem Scheduling
III. Piggybacking Bandwidth Requests
IV. Conclusion

### I. Data Traffic Management System Overview

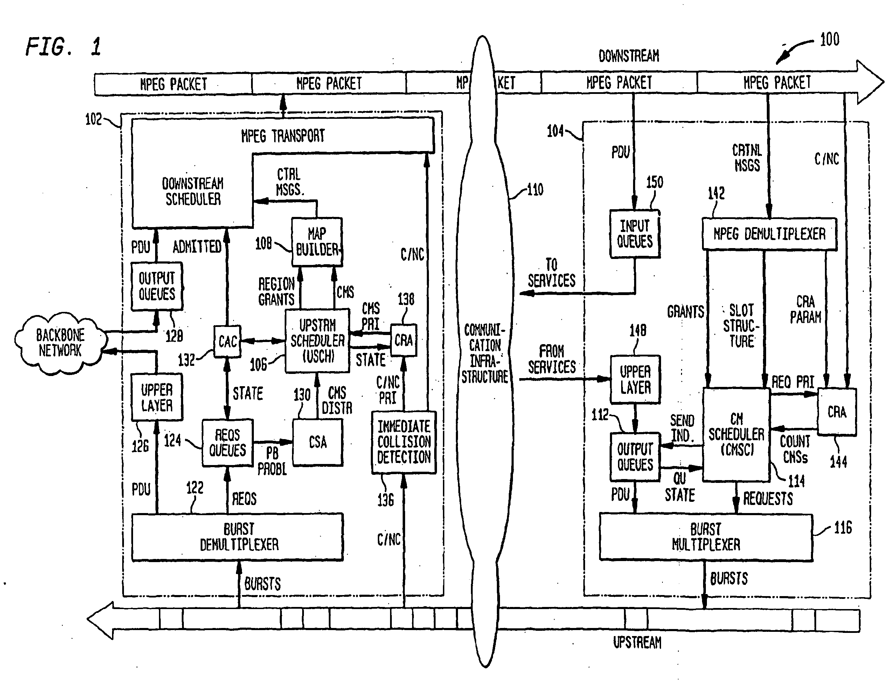

FIG. 1 illustrates data traffic management system 100

System 100 includes a headend or cable modem termination system (CMTS) 102 that exchanges data with one or more cable modems 104 over a communications interface 110, which includes wired or wireless local area networks (LAN) or wide area networks (WAN), such as an organization's intranet, local internets, the global-based Internet (including the World Wide Web (WWW), private enterprise networks, or the like, Communications interface 110 includes wired, wireless or both, transmission media, including satellite, terrestrial (fiber optic, copper, coaxial and the like), radio, microwave and any other form or method of transmission. CMTS 102 and cable modem 104 can be integrated to support protocols, such as, Internet Protocol (IP), Transmission Control Protocol (TCP), User Datagram Protocol (UDP), Real Time Transport Protocol (RTP), Resource Reservation Protocol (RSVP), or the like.

One or more downstream channels carry information (such as, television signals, IP data packets, control messages in MPEG format) from CMTS 102 to the plurality cable modems 104. Similarly, one or more upstream channels carry bursts of packets from the cable modems 104 to CMTS 102. The bursts can be assigned or allocated by mini-slots prior to upstream transmissions. Alternatively the bursts are quantified and apportioned by bits, bytes, mini-ticks (such as 2.5 µm per click) or like metrics for apportioning bandwidth regions. The burst includes bandwidth requests from cable modems 104 and transmissions of data from the corresponding services, as discussed in greater detail below.

CMTS 102 includes an upstream scheduler 106 that arbitrates bandwidth requirements among multiple cable modems 104. Map builder 108 also is included within CMTS 102 to transmit a MAP containing upstream slot specifications and grant specifications to cable modems 104 MAPs can be introduced into the MPEG transport stream of downstream communication as control messages.

Bursts from cable modems 104 are received by burst demultiplexer 122, which forms the physical layer interface between CMTS 102 and the upstream channel from communications interface 110. Burst demultiplexer 122 sends bandwidth request to request queue 124 and other packets to upper layer 126, which forwards the packet to another device or application, such as a web browser, another cable modem 104, or other data receiver. Packets from these other data receivers are collected by output queue 128 for external use.

A contention slot allocator (CSA) 130 specifies which areas in an upstream channel are to be used as assigned bandwidth regions for grants and contention transmissions. If no requests are resident in request queue 124, the bandwidth region can be allocated to contention transmissions. In an embodiment, a piggyback probability metric is sent from request queue 124 to CSA 130 to aid CSA 130 in determining the percentage of bandwidth to allocate for grants and contention transmissions.

The state of request queue 124 is sent to call admission controller (CAC) 132 that decides whether to admit more traffic into system 100. In an embodiment CAC 132 is operable to process voice data and generate a call admission signal if a call is accepted. The call admission signal is sent downstream to the cable modem 104 that is requesting a call admission. However CAC 132 is not limited for use with voice data. CAC 132 can support other forms of media and multimedia. CAC 132 also sends the parameters for establishing queues within upstream scheduler 106, and upstream scheduler 106 notifies CAC 132 after the queues have been established. Upstream scheduler 106 also received information from CSA 130 representative of the distribution of contention bandwidth regions or contention mini-slots (CMS). Based on information received from CAC 132, CSA 130 and a collision resolution algorithm device (CRA) 138, upstream scheduler 106 specifies the bandwidth regions for grants and contention requests.

Collision detector 136 monitors contention regions in the upstream channels on a continuous basis to detect a collision immediately if a collision occurs. Collision detector 136 sends a collision/no collision (C/NC) signal to CRA 138, which uses the C/NC signal to adjust the CRA parameters. This allows the C/NC signal and an acknowledgment/no acknowledgment message to be sent downstream to enable cable modem 104 to resent the collided request.

Each cable modem 104 hosts one or more services to a subscriber. The services (typically identified by a service identification or SID) include telephony, television broadcasts, internet communications (e.g., WWW), facsimile, file data transfer, electronic mailing services (email), video conferencing, live or time-delayed feeds (such as, speeches, debates, presentations, news reports, sporting events, concerts, etc.), and the like. Hence, the data exchanged between CMTS 102 and cable modems 104 includes text, video, audio, voice, graphics, other media or a combination thereof (i.e., multimedia).

Cable modem 104 includes an output queue 112, CM scheduler 114 and burst multiplexer 114. Each service provided by cable modem 104 is mapped to one or more priority queues (not shown) within output queue 112. CM scheduler 114 is responsible for deciding the order in which packets are sent, and for controlling and balancing the request/grant loop process for all services. At the appropriate time, CM scheduler 114 directs packets to be sent to burst multiplexer 116, where the packets are multiplexed into a burst.

MAP messages from CMTS 102 are recovered with other messages by a demultiplexer 142. Grants in the MAP messages containing the slot structure and grants for the requesting cable modem 104 are separated and sent to CM scheduler 114 to control the allocation of packets to the granted bandwidth regions. The C/NC signal transmitted downstream and the CRA parameter derived from a control message are sent downstream and used by the downstream CRA 144 to adopt the parameters. CRA 144 sends the count of contention regions to CM scheduler 114. These counts corresponds to the number of priority CMSs the cable model 104 must wait before it can transmit a request in a contention bandwidth region of the same priority.

Input queue 150 stores data received from the upstream until it is ready to be processed by the services. Upper layer 148 receives packets from the services and forwards them to output queue 112.

### II. Cable Modem Scheduling

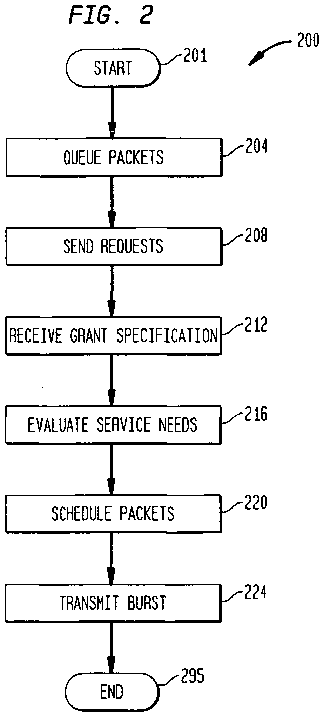

Referring to FIG. 2, flowchart 200 represents the general operational flow of an embodiment of the present invention. More specifically, flowchart 200 shows an example of a control flow for scheduling data transmissions from cable modem 104 over communication infrastructure 110.

Referring to FIG. 2, the control flow of flowchart 200 begins at step 201 and passes immediately to step 204. At step 204, output queue 112 receives a data packet from a service (e.g., telephony, cable, and the like) and stores the packet within the appropriate priority queue (not shown). Output queue 112 notifies CM scheduler 114 of its queue state on a periodically scheduled basis. In an embodiment, output queue 112 transmits its queue state each time it is modified.

At step 208, upon notification from output queue 112, CM scheduler 114 decides whether to send a request message for bandwidth to CMTS 102, based on internal policies or rules. CMTS 102 prepares a grant specification to allocate bandwidth according to the size specified in the bandwidth request. The grant specification is transmitted to the requesting cable modem 104.

At step 212, CM scheduler 114 receives the grant specification from CMTS 102, and at step 216, CM scheduler 114 evaluates the needs of the scrvice(s) being provided by cable modem 104. In an embodiment, CM scheduler 114 evaluates the needs by considering the current queue state of the priority queues for each service. The current queue state can be evaluated by measuring the quantity of packets, bandwidth size, byte size, or the like. In an embodiment, CM scheduler 114 evaluates the needs of the service(s) by balancing throughput requirements versus latency. For example, it may become necessary to interrupt or fragment a transmission of text data to allow a voice transmission since voice communication require a lower tolerance for delay.

At step 220, CM scheduler 114 determines which packets to send, based on the needs assessment performed at step 212. Therefore, CM scheduler 114 is not required to use a grant in the same order that the corresponding requests were sent. CM scheduler 114 functions as a bandwidth manager that decides how to use the received grants according to the current needs of an active service. Since the needs of a service can change from the time of requesting a grant, CM scheduler 114 is programmable to assign a particular granted region (or portion thereof) to a different service than the one specified in the grant specification.

In an embodiment, CM scheduler 114 is priority based and will empty the priority queue for a higher-priority service before drawing data from the priority queue for a lower-priority service. For example, a higher-priority service (such as, telephony) and a lower-priority service (such a, web browsing) can request bandwidth from CMTS 102. The flexible use of grants provided by cable modem 104 allows the higher-priority service (i.e., telephony) to borrow a first arriving lower-priority grant if the grant arrives earlier than its own grant. The lower-priority service (i.e., web browsing) would be permitted to utilize the bandwidth granted to the higher-priority, unless another higher-priority service is judged to require the grant.

In an embodiment, each service is registered as being a borrower, lender, both or none. As a borrower, the service is permitted to transmit data in a slot granted to another service. As a lender, the service is permitted to allow another service to transmit data over a slot granted to the lender. If registered as none, the service is not permitted to lend or borrow grants. Finally, as both, the service operates as a lender and borrower.

Thus, cable modem 104 is a flexible modem. In other words, CM scheduler 114 is configurable to overwrite a centralized CMTS scheduling decision in a seamless manner, such that the overwriting is virtually undetectable by CMTS 102 or the subscriber receiving the service. As described above, conventional systems (e.g., a DOCSIS-compliant system) must follow the instructions given in a grant. However, CM scheduler 114 decides which priority queues to transmit at the time the data is sent, instead of maintaining the decisions made at the requesting phase. Accordingly, CM scheduler 114 is programmable to change decisions at any time ranging from when CM scheduler 114 first sends a request until it transmits the actual information.

Nonetheless, the grant slots must be scheduled such that CMTS 102 detects a matching between the amount of data requested from a service and the actual amount of data the service is transmitting. In other words, CM scheduler 104 must balance the request/grant loop for each individual service. Additionally, each service must request bandwidth even if it has nothing to send in queue 112 but has used the grants apportioned to other services. As a result, the present invention guarantees that a grant for the other services will be available at some future point in time. Moreover, an advantage of the present invention is that cable modem 104 can reduce the latency of higher-priority services, which manifests a substantial improvement in quality of service. Another advantage of the present invention is that cable modem 104 can operate with more services than the ones that CMTS 102 may have recognized at a given point in time. This is a transient advantage because, as discussed, cable modem 104 permits a borrowing service to used the grant of a lending service, only if a bandwidth request will be transmitted for the borrowing service.

Referring again to FIG. 2, after CM scheduler 114 has selected the packets to be transmitted, the control flow passes to step 224, where burst multiplexer 116 formats the data packets and transmits a burst to CMTS 102. After the burst has been transmitted, the control flow ends as indicated by step 295.

### III. Piggybacking Bandwidth Requests

Referring back to FIG. 2, at step 208, CM scheduler 114 transmits bandwidth requests in either contention or piggyback mode. As discussed above, any request transmitted in contention mode bares the risk of being corrupted or loss due to collision.

Piggyback mode can be used to reduce the load of requests in the contention channel. In an embodiment, CM scheduler 114 prepares a piggyback request message that is formatted to have the highest priority for transmissions. Convention piggybacking requests are included as part of an extended header of another message. However, the piggyback request messages of the present invention are separate messages that are transmitted in a contention channel or a reservation channel without making a previous reservation. As used herein, traditional piggybacking is referred to as being piggyback requests in extended headers and independent piggybacking is referred to as being piggyback requests that are sent as separate messages.

Since concatenating messages typically do not introduce any additional overhead, the efficiency of independent piggybacking is comparable to the efficiency gained by using traditional piggybacking for systems with smaller header sizes. For example, an implicit convention for voice packets is the specification of very small headers. An advantage of independent piggybacking is that the piggyback request message can be easily sent anywhere in a burst (i.e., between packets) without imposing any processing delays on CMTS 102, in particularly in cases where headers cannot be easily extended.

As discussed with reference to step 220 as shown in FIG. 2, CM scheduler 114 has the flexibility to use grant slots to optimize throughput and reduce latency. As such, a piggyback request message can be transmitted at anytime upon receipt of a grant specification or in contention mini-slots. The piggyback request message can be inserted in a burst of voice packets or other data packets (i.e., text, graphics). In an embodiment, CM scheduler 114 uses cross-piggybacking to combine a piggyback request message for one service (i.e., primary piggyback) with a piggyback request messages from one or more other services (i.e., secondary piggyback(s)). Although secondary piggybacks are generally requests from other services, secondary piggybacks can also be from the same service. For example, a service may request more bandwidth than the maximum request size imposed by system 100. In addition, CM scheduler 114 may decide to send another request before it receives a grant for a previously transmitted request. Therefore, a cable modem 104 can have more than one piggyback request outstanding in CMTS 102, at any given time.

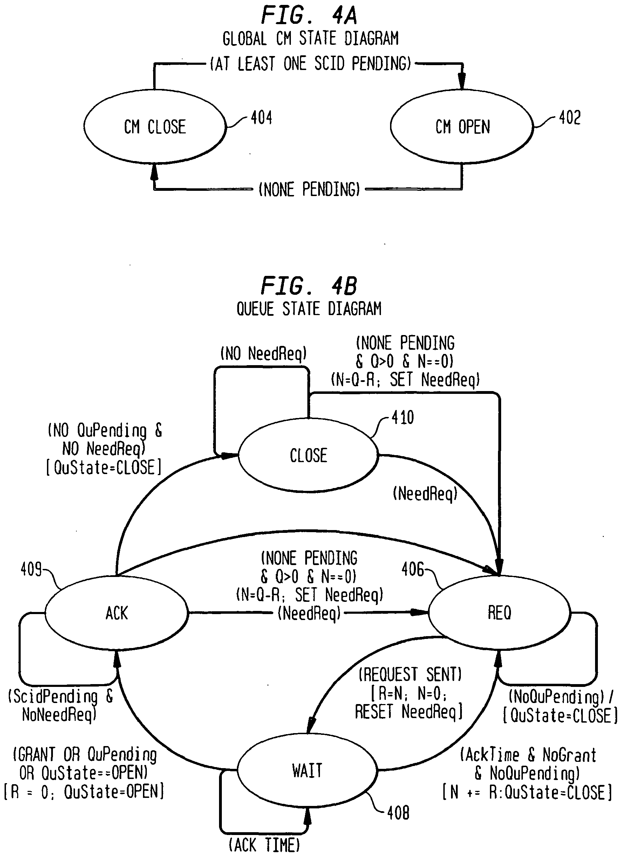

FIGs. 4a-4b illustrate an operational flow for requesting and granting bandwidth according to an embodiment of the present invention. Referring to FIG. 4a, the operational states of cable 104 are shown as being in either an open state 402 or closed state 404. Open state 402 indicates that cable modem 104 has one or more requests outstanding. Closed state 404 indicates that cable modem 104 has no outstanding requests.

FIG. 4b shows the operational flow of the various queue states for cable modem 104, according to an embodiment of the present invention. More specifically, when cable modem 104 is operating in open state 402, cable modem 104 can operate in one or more of four queues states, namely requesting state 406, waiting state 408, acknowledge state 409 and close state 410. Requesting state 406 indicates that CM scheduler 114 is requesting bandwidth from CMTS 102. Once the request has been transmitted, cable modem 104 enters waiting state 408 until feedback is received from CMTS 102. Acknowledge state 409 indicates that CMTS 102 has received the request or cable modem 104 has received a corresponding grant. If cable modem 104 remains in acknowledge state 409 or waiting state 408 beyond a predetermined time, cable modem 104 generate another request (i.e., re-enter request state 406). In other words, if cable modem 104 does not receive an acknowledgment message or grant message within a predetermined time frame, cable modem 104 will generate another request.

After all requests have been granted or there are no other pending or outstanding requests, cable modem 104 enters a close state 410. Close state 410 indicates that either output queue 112 has not recently signaled CM scheduler 114 for additional bandwidth or all requests have been granted or are no longer required.

### IV. Conclusion

FIG. 1 is a conceptual illustration of system 100 that allows an easy explanation of the present invention. That is, one or more of the blocks can be performed by the same piece of hardware or module of software. It should also be understood that the present invention can be implemented in hardware, software, or a combination thereof the various components and steps would be implemented in hardware and/or software to perform the functions of the present invention.

Additionally, the present invention (e.g., system 100 or any part thereof) can be implemented in one or more computer systems or other processing systems. In fact the invention can be implemented by one or more computer systems capable of carrying out the functionality described herein.

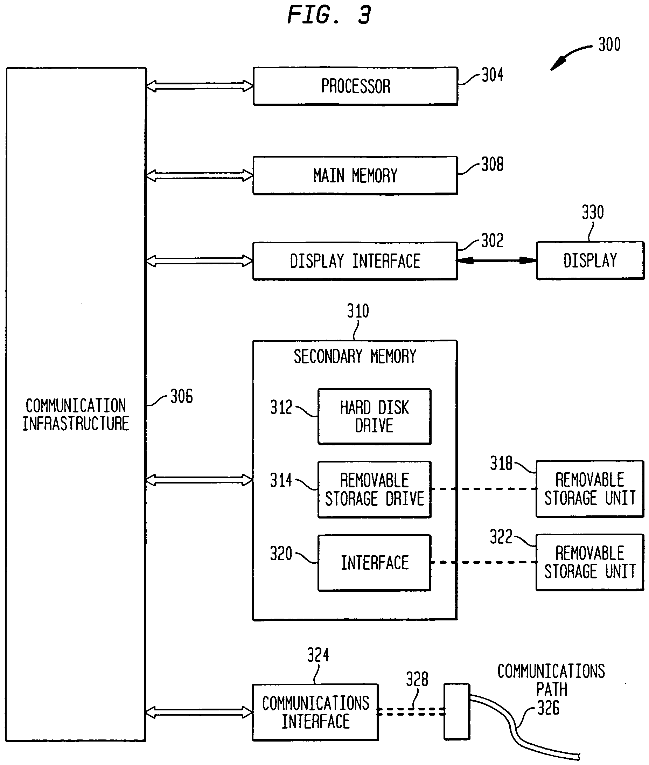

Referring to FIG. 3, an example computer system 300 useful in implementing the present invention is shown. The computer system 300 includes one or more processors, such as processor 304. The processor 304 is connected to a communication infrastructure 306 (e.g., a communications bus, crossover bar, or network). Various software embodiments are described in terms of this exemplary computer system. After reading this description, it will become apparent to a person skilled in the relevant art(s) how to implement the invention using other computer systems and/or computer architectures.

Computer system 300 can include a display interface 302 that forwards graphics, text, and other data from the communication infrastructure 306 (or from a frame buffer not shown) for display on the display unit 330.

Computer system 300 also includes a main memory 308, preferably random access memory (RAM), and can also include a secondary memory 310. The secondary memory 310 can include, for example, a hard disk drive 312 and/or a removable storage drive 314, representing a floppy disk drive, a magnetic tape drive, an optical disk drive, etc. The removable storage drive 314 reads from and/or writes to a removable storage unit 318 in a well-known manner. Removable storage unit 318, represents a floppy disk, magnetic tape, optical disk, etc. which is read by and written to removable storage drive 314. As will be appreciated, the removable storage unit 318 includes a computer usable storage medium having stored therein computer software and/or data.

Alternatively secondary memory 310 can include other similar means for allowing computer programs or other instructions to be loaded into computer system 300. Such means can include, for example, a removable storage unit 322 and an interface 320. Examples of such can include a program cartridge and cartridge interface (such as that found in video game devices), a removable memory chip (such as an EPROM, or PROM) and associated socket, and other removable storage units 322 and interfaces 320 which allow software and data to be transferred from the removable storage unit 322 to computer system 300.

Computer system 300 can also include a communications interface 324. Communications interface 324 allows software and data to be transferred between computer system 300 and external devices. Examples of communications interface 324 can include a modem, a network interface (such as an Ethernet card), a communications port, a PCMCIA slot and card, etc. Software and data transferred via communications interface 324 are in the form of signals 328 which can be electronic, electromagnetic, optical or other signals capable of being received by communications interface 324. These signals 328 are provided to communications interface 324 via a communications path (i.e., channel) 326. This channel 326 carries signals 328 and can be implemented using wire or cable, fiber optics, a phone line, a cellular phone link, an RF link and other communications channels.

In this document, the terms "computer program medium" and "computer usable medium" are used to generally refer to media such as removable storage drive 314, a hard disk installed in hard disk drive 312, and signals 328. These computer program products are means for providing software to computer system 300. The invention can be implemented by such computer program products.

Computer programs (also called computer control logic) are stored in main memory 308 and/or secondary memory 310. Computer programs can also be received via communications interface 324. Such computer programs, when executed, enable the computer system 300 to perform the features of the present invention as discussed herein. In particular, the computer programs, when executed, enable the processor 304 to perform the features of the present invention. Accordingly, such computer programs represent controllers of the computer system 300.

where the invention is implemented using software, the software can be stored in a computer program product and loaded into computer system 300 using removable storage drive 314, hard drive 312 or communications interface 324. The control logic (software), when executed by the processor 304, causes the processor 304 to perform the functions of the invention as described herein.

the invention may be implemented primarily in hardware using, for example, hardware components such as application specific integrated circuits (ASICs). Implementation of the hardware state machine so as to perform the functions described herein will be apparent to persons skilled in the relevant art(s).

the invention may be implemented using a combination of both hardware and software.

While various embodiments of the present invention have been described above, it should be understood that they have been presented by way of example, and not limitation. It will be apparent to persons skilled in the relevant art(s) that various changes in form and detail can be made therein. Moreover, it should be understood that the method of the present invention should not be limited to transmissions between cable modems and headends. The present invention can be implemented in any multi-nodal communications environment governed by a centralized node. The nodes can include communication gateways, switches, routers, Internet access facilities, servers, personal computers, enhanced telephones, personal digital assistants (PDA), televisions, set-top boxes or the like. Thus, the present invention should not be limited by any of the above described exemplary embodiments, but should be defined only in accordance with the following claims.

## Claims

1. A method for managing upstream communications from a local node (114) in a communications network having at least one remote node (102) and one or more local nodes (104), each local node (104) providing one or more services, each local node comprising a local scheduler (114) that sends requests for bandwidth and manages bandwidth allocation, an output queue (112), and a burst multiplexer (116), comprising the steps of:
(a) mapping (204) each service provided by said local node (104) to one or more priority queues within said output queue (112);
(b) receiving data packets from a service and storing said data packets within the appropriate mapped priority queue;
(c) sending to the remote node (208) a request to transmit the stored data packets;
(d) receiving (212) a grant specification from said remote node (102), said grant specification providing authorization to transmit data packets related to the transmit request;
(e) evaluating (216) the service needs of said one or more services;
(f) scheduling data packets by determining which of said stored data packets to send based on said evaluating step and the received grant specification
(g) sending said scheduled data packets to said burst multiplexer (116), where said scheduled data packets are multiplexed into a burst; and
(h) transmitting (224) said burst to the remote node within slots specified in the received grant specification, wherein
said scheduling step comprises a higher priority service borrowing granted bandwidth from a lower priority service and subsequently said higher priority service sending a request to transmit data packets and, upon receipt of the grant specification providing authorization to transmit data packets of the higher priority service, permitting the lower priority service to utilise the bandwidth granted to the higher priority service.

2. A method of claim 1, where said evaluating step (e) comprises evaluating the current state of queues (112) for each of said services.

3. A method of claim 1, where said evaluating step (e) comprises evaluating throughput and latency needs of said services.

4. A method of claim 1, wherein the request to transmit data of step (c) is sent as a piggyback bandwidth request in a message in the burst, said message being separate from the data packets.

5. A method of claim 4, wherein multiple piggyback bandwidth requests are sent.

## Patentansprüche

1. Verfahren zum Verwalten von Upstream-Kommunikationen von einem lokalen Knoten (114) in einem Kommunikationsnetz, das zumindest einen entfernten Knoten (102) und einen oder mehrere lokale Knoten (104) aufweist, wobei jeder lokale Knoten (104) einen oder mehrere Dienste bereitstellt, und wobei jeder lokale Knoten einen lokalen Scheduler (114), der Bandbreitenanforderungen sendet und die Bandbreitenzuweisung verwaltet, eine Ausgangswarteschlange (112) und einen Burst-Multiplexer (116) umfasst, wobei das Verfahren die Schritte umfasst:
(a) Abbilden (Mapping) (204) eines jeden durch den lokalen Knoten (104) bereitgestellten Diensts in einer oder mehreren Prioritätswarteschlangen in der Ausgangswarteschlange (112),
(b) Empfangen von Datenpaketen von einem Dienst und Speichern der Datenpakete in der geeigneten abgebildeten Prioritätswarteschlange,
(c) Senden (208) einer Übertragungsanforderung für die gespeicherten Datenpakete an den entfernten Knoten,
(d) Empfangen (212) einer Genehmigungsspezifikation von dem entfernten Knoten (102), wobei die Genehmigungsspezifikation die Befugnis erteilt, mit der Übertragungsanforderung in Zusammenhang stehende Datenpakete zu übertragen,
(e) Bewerten (216) der Diensterfordernisse des einen oder der mehreren Dienste,
(f) zeitliches Planen (Scheduling) von Datenpaketen durch Bestimmen, welches der gespeicherten Datenpakete gesendet werden soll, basierend auf dem Bewertungsschritt und der empfangenen Genehmigungsspezifikation,
(g) Senden der zeitlich geplanten Datenpakete an den Burst-Multiplexer (116), wo die zeitlich geplanten Datenpakete zu einem Burst gemultiplext werden, und
(h) Übertragen (224) des Burst an den entfernten Knoten innerhalb von Zeitschlitzen, die in der empfangenen Genehmigungsspezifikation spezifiziert sind, wobei
- der Schritt des zeitlichen Planens umfasst: Ausleihen genehmigter Bandbreite von einem Dienst niedrigerer Priorität durch einen Dienst höherer Priorität und, im Anschluss daran, Senden einer Übertragungsanforderung für Datenpakete durch den Dienst höherer Priorität und, bei Empfang der Genehmigungsspezifikation, Erteilen der Befugnis, Datenpakete des Dienstes höherer Priorität zu übertragen, sowie Zulassen, dass der Dienst niedrigerer Priorität die für den Dienst höherer Priorität genehmigte Bandbreite nutzt.

2. Verfahren nach Anspruch 1,
wobei der Bewertungsschritt (e) das Bewerten des aktuellen Status der Warteschlangen (112) für jeden der Dienste umfasst.

3. Verfahren nach Anspruch 1,
wobei der Bewertungsschritt (e) das Bewerten der Durchsatz- und Latenzerfordernisse der Dienste umfasst.

4. Verfahren nach Anspruch 1,
wobei die Übertragungsanforderung für Daten aus Schritt (c) als Huckepack-Bandbreitenanforderung in einer Nachricht im Burst gesendet wird, wobei die Nachricht von den Datenpaketen getrennt ist.

5. Verfahren nach Anspruch 4,
wobei mehrere Huckepack-Bandbreitenanforderungen gesendet werden.

## Revendications

1. Procédé de gestion de communications en voie montante à partir d'un noeud local (114) dans un réseau de communications ayant au moins un noeud distant (102) et un ou plusieurs noeuds locaux (104), chaque noeud local (104) fournissant un ou plusieurs services, chaque noeud local comprenant un programmateur local (114) qui envoie des demandes de largeur de bande et gère une attribution de largeur de bande, une file d'attente de sortie (112), et un multiplexeur de rafales (116), comprenant les étapes de :
(a) mappage (204) de chaque service fourni par ledit noeud local (104) sur une ou plusieurs files d'attente avec priorité au sein de ladite file d'attente de sortie (112) ;
(b) réception de paquets de données d'un service et stockage desdits paquets de données dans la file d'attente avec priorité mappée appropriée ;
(c) envoi au noeud distant (208) d'une demande pour transmettre les paquets de données stockés ;
(d) réception (212) d'une spécification d'attribution dudit noeud distant (102), ladite spécification d'attribution fournissant l'autorisation de transmettre des paquets de données se rapportant à la demande de transmission ;
(e) évaluation (216) des besoins de service dudit un service ou desdits plusieurs services ;
(f) programmation de paquets de données en déterminant lesquels desdits paquets de données stockés il convient d'envoyer sur la base de ladite étape d'évaluation et de ladite spécification d'attribution reçue ;
(g) envoi desdits paquets de données programmés audit multiplexeur de rafales (116), où lesdits paquets de données programmés sont multiplexés en une rafale ; et
(h) transmission (224) de ladite rafale au noeud distant à l'intérieur d'intervalles de temps spécifiés dans la spécification d'attribution reçue, dans lequel
ladite étape de programmation comprend un service de priorité supérieure empruntant de la largeur de bande attribuée à un service de priorité inférieure et ensuite ledit service de priorité supérieure envoyant une demande pour transmettre des paquets de données et, à réception de la spécification d'attribution, fournissant l'autorisation de transmettre des paquets de données du service de priorité supérieure, le service de priorité inférieure étant autorisé à utiliser la largeur de bande attribuée au service de priorité supérieure.

2. Procédé selon la revendication 1, dans lequel ladite étape d'évaluation (e) comprend l'évaluation de l'état actuel de files d'attente (112) pour chacun desdits services.

3. Procédé selon la revendication 1, dans lequel ladite étape d'évaluation (e) comprend l'évaluation de besoins de débit et de latence desdits services.

4. Procédé selon la revendication 1, dans lequel la demande de transmission de données de l'étape (c) est envoyée comme une demande de largeur de bande de portage dans un message dans la rafale, ledit message étant séparé des paquets de données.

5. Procédé selon la revendication 4, dans lequel des demandes de largeur de bande de portage multiples sont envoyées.
